# EUROPÄISCHE PATENTANMELDUNG

(11) **EP 3 136 243 A1**
(43) Veröffentlichungstag der Anmeldung: **01.03.2017**
(21) Anmeldenummer: 16001882.6
(22) Anmeldetag: 26.08.2016
(51) Int. Cl.: G06F 11/36, G06F 9/50

(54) **CODEVERSCHLEIERUNG**

(30) Priorität: 28.08.2015 DE 102015011315
(71) Anmelder: Giesecke & Devrient GmbH, 81677 München (DE)
(72) Erfinder: Pulkus, Jürgen, 80469 München (DE)
(74) Vertreter: Metzler, Volker

(57) **Zusammenfassung**

Die Erfindung betrifft ein Verfahren zum Verschleiern von Programmcode. Dabei werden bei der Ausführung des Programmcodes auf einem Prozessor nebenläufig ausführbare Threads erzeugt. Der Programmcode wird derart ausgebildet, dass beim Ausführen des Programmcodes beabsichtigt eine Race Condition zwischen einzelnen Threads derart entsteht, dass abhängig davon, ob der Programmcode auf einem Ein-Kern-Prozessor oder auf einem Mehr-Kern-Prozessor ausgeführt wird, ein durch den Programmcode berechnetes Ergebnis (a, b) unterschiedlich ausfällt.

## Beschreibung

Die vorliegende Erfindung betrifft ein Verfahren zum Verschleiern eines Programmcodes sowie ein einen solchen Programmcode umfassendes Computerprogrammprodukt.

Zunehmend erfolgt das Ausführen von kryptographischen Verfahren nicht mehr ausschließlich in einer gesicherten Umgebung, beispielsweise in einem Sicherheitselement eines Endgeräts, wie z.B. einer SIM/UICC-Mobilfunkkarte, welche in ein mobiles Endgerät integriert ist, sondern auf einem Prozessor des Endgeräts selbst - und somit in einer ungeschützten Umgebung.

Ein Angreifer, welcher es darauf abgesehen hat, im Rahmen des kryptographischen Verfahrens verarbeitete sensible Daten, beispielsweise kryptographische Schlüssel, auszuspähen, hat dabei sowohl die Möglichkeit, den Programmcode zu analysieren, als auch die Berechnung, welche der Programmcode ausführt, gezielt zu manipulieren.

Um einem Angreifer die Analyse des Programmcodes, beispielsweise mittels Debuggens oder mittels Reverse Engineering, zu erschweren, sind zahlreiche Verfahren bekannt, welche unter dem Begriff "Code Obfuscation" (Codeverschleierung) zusammengefasst werden können.

Aufgabe der vorliegenden Erfindung ist es, eine weitere Alternative zur Codeverschleierung vorzuschlagen.

Diese Aufgabe wird durch ein Verfahren und ein Computerprogrammprodukt mit den Merkmalen der nebengeordneten Ansprüche gelöst. Bevorzugte Ausgestaltungen und Weiterbildungen sind in den nebengeordneten Ansprüchen angegeben.

Gemäß einer bevorzugten Ausführungsform eines Verfahrens zum Verschleiern von Programmcode, wobei bei der Ausführung des Programmcodes auf einem Prozessor nebenläufig ausführbare Prozesse oder Threads erzeugt werden, wird der Programmcode derart ausgebildet, dass beim Ausführen des Programmcodes beabsichtigt eine so genannte Race Condition zwischen einzelnen Prozessen oder Threads derart entsteht, dass abhängig davon, ob der Programmcode auf einem Ein-Kern-Prozessor oder auf einem Mehr-Kern-Prozessor bzw. auf mehreren Ein-Kern-Prozessoren ausgeführt wird, ein durch den Programmcode berechnetes Ergebnis unterschiedlich ausfällt.

Mit anderen Worten wird erfindungsgemäß ein herkömmlich als Programmierfehler angesehenes Auftreten einer Race Condition in nachstehend noch im Detail beschriebener Weise zur Codeverschleierung verwendet.

Dahinter liegt der Grundgedanke, dass der Programmcode bei beabsichtigter, berechtigter Verwendung auf einem Mehr-Kern-Prozessor, beispielsweise einem Mehr-Kern-Prozessor eines Smartphones, ausgeführt wird. Ein Angreifer hingegen wird zum Debuggen oder zum Zwecke des Reverse Engineering den Programmcode in der Regel auf einem Ein-Kern-Prozessor ausführen, da dies die Analyse von Programmcode wesentlich vereinfacht. Dies macht sich die Erfindung zu Nutze. Der Programmcode ist derart ausgebildet, dass beim herkömmlichen, vom Hersteller des Programmcodes vorgesehenen Ausführen des Programmcodes auf einem Mehr-Kern-Prozessor sich ein erstes, erwünschtes Ergebnis ergibt. In dem Fall jedoch, dass der Programmcode lediglich auf einem Ein-Kern-Prozessor ausgeführt wird, führt dies zur Ausgabe eines von einem gewünschten Ergebnis verschiedenen Ergebnis, da die in dem Programmcode angelegte Race Condition in diesem Fall zu einem abweichenden zeitlichen Verhalten unterschiedlicher nebenläufig ausgeführter Prozesse oder Threads führt.

Im Folgenden wird wegen der einfacheren Lesbarkeit lediglich auf "Threads" Bezug genommen, und nicht mehr auf "Prozesse". Wesentlich ist im Zusammenhang der vorliegenden Erfindung lediglich, dass einzelne Threads auf verschiedenen Prozessoren oder Prozessor-Kernen ausgeführt werden, falls die verwendete Hardware diese bereitstellt. Folglich wird auch nicht mehr stets erwähnt, dass statt eines Mehr-Kernprozessors auch eine Mehrzahl von Ein-Kern-Prozessoren verwendet werden können. Wesentlich ist im vorliegenden Zusammenhang lediglich die Unterscheidung, ob zum Ausführen des Programmcodes ein oder mehrere Prozessoren oder Prozessorkerne zur Verfügung stehen. Steht lediglich ein Prozessor oder Prozessorkern zur Verfügung, so müssen alle Threads notwendigerweise sequentiell abgearbeitet werden. Stehen hingegen eine Mehrzahl von Prozessoren oder Prozessorkernen zur Verfügung, so ist die Möglichkeit einer echt parallelen Ausführung einzelner Threads gegeben.

Die Race Condition kann vorliegend allgemein auch als deterministische Race Condition oder als deterministisch herbeigeführte Race Condition bezeichnet werden, insbesondere da ihr Auftreten vorab bestimmt ist. Die Race Condition wird vom Programmcode erzwungen, insbesondere abhängig von der Anzahl der Kerne. Auf einem Ein-Kern-Prozessor tritt die Race-Condition stets auf, auf einem Mehr-Kern-Prozessor dagegen nicht.

Gemäß einer ersten Variante wird der Programmcode derart ausgebildet, dass beim Ausführen des Programmcodes auf einem Ein-Kern-Prozessor zumindest ein Kontextwechsel von einem ersten Thread zu einem zweiten Thread erfolgt, bevor der erste Thread vollständig abgearbeitet ist.

Ein Kontextwechsel kann dabei beispielsweise dadurch erfolgen, dass der erste Thread blockiert wird.

Alternativ oder zusätzlich kann ein Kontextwechsel auch von dem ersten Thread aktiv herbeigeführt werden. Dazu kann der erste Thread beispielsweise die Ausführung an den Scheduler zurückgeben.

Beim Ausführen des Programmcodes auf einem Ein-Kern-Prozessor führt ein solches Verhalten des ersten Threads notwendigerweise zu einem Kontextwechsel zu einem weiteren Thread, da zu dem Zeitpunkt, da der erste Thread in dem Prozessor-Kern ausgeführt wird, die weiteren Threads nicht ausgeführt werden können, und somit auf eine weitere Ausführung warten.

Beim Ausführen des Programmcodes auf einem Mehr-Kern-Prozessor hingegen muss weder ein Blockieren des ersten Threads noch der Versuch des aktiven Herbeiführens eines Kontextwechsels durch den ersten Thread notwendigerweise zu einem Kontextwechsel führen. Dies gilt immer dann, wenn weitere Threads bereits auf weiteren Kernen des Prozessors ausgeführt werden und somit kein wartender Thread vorliegt.

Besonders bevorzugt wird der Programmcode mit Bezug auf diese Variante derart ausgebildet, dass beim Ausführen des Programmcodes auf einem Ein-Kern-Prozessor mehrfach ein Kontextwechsel zwischen dem ersten Thread und dem zweiten Thread erfolgt. Hierbei wird es für einen Angreifer, allein auf Basis des Programmcodes, sehr schwer herauszufinden, in welcher Situation welcher der beiden Thread blockiert ist oder ausgeführt wird. Dies gilt insbesondere, wenn zusätzlich zu den beiden Threads noch weitere Threads nebenläufig ausgeführt werden.

Gemäß einer weiteren bevorzugten Variante wird der Programmcode derart ausgebildet, dass beim Ausführen des Programmcodes zumindest zwei der Threads zumindest einmal synchronisiert werden. Ein Synchronisieren einzelner Threads unterstützt zum einen einen stabilen Ablauf des Programmcodes auf einem Mehr-Kern-Prozessor. Zum anderen erschwert eine Synchronisierung einzelner Threads die Codeanalyse, wenn der Programmcode auf einem Ein-Kern-Prozessor ausgeführt wird, wie dies nachfolgend noch exemplarisch erläutert wird.

Vorzugsweise wird der Programmcode, im Zusammenhang mit der Synchronisierung zweier Threads, derart ausgebildet, dass aus einem einem ersten Thread zugeordneten Programmcodeabschnitt des Programmcodes nicht eindeutig ersichtlich ist, mit welchem anderen Thread der erste Thread beim Ausführen des Programmcodes synchronisiert wird. Dies kann beispielsweise dadurch erfolgen, dass der erste Thread blockiert wird, da er darauf wartet, einen Wert aus einer so genannten Synchronisierungsvariable zu entnehmen, die aktuell noch leer ist. Dabei ist es aber aus dem Programmcodeabschnitt, welcher den ersten Thread codiert, nicht ersichtlich, welcher der anderen Threads die entsprechende Synchronisierungsvariable mit einem Wert füllt, und damit eine Synchronisierung herbeiführt und den ersten Thread wieder entblockiert oder "aufweckt".

Gemäß einer dritten Variante kann der Programmcode derart ausgebildet sein, dass beim Ausführen des Programmcodes eine Kommunikation zwischen zumindest zwei der Threads stattfindet. Eine solche Kommunikation kann, wie vorstehend bereits erwähnt, zusätzlich zur Synchronisierung einzelner Threads verwendet werden. Alternativ oder zusätzlich kann eine solche Kommunikation auch derart erfolgen, dass dabei keine Blockade einzelner Threads stattfindet. Beispielsweise können verschiedene Threads eingerichtet sein, auf ein und dieselbe Speicherstelle lesend und/ oder schreibend zuzugreifen, ohne dass hierfür die Speicherstelle jeweils blockierende/freigebende Sicherungsmaßnahmen vorgesehen sind.

Vorzugsweise umfasst die Kommunikation zwischen zumindest zwei der Threads eine Übergabe eines Wertes aus einer Mehrzahl von Werten von einem ersten Thread an einen zweiten Thread. Dabei kann aus dem dem erste Thread zugeordneten Programmcodeabschnitt des Programmcodes oder aus dem dem zweiten Thread zugeordneten Programmcodeabschnitt des Programmcodes nicht abgeleitet werden, welcher Wert aus der Mehrzahl der Werte beim Ausführen des Programmcodes von dem ersten Thread an den zweiten Thread übergeben wird. Dies liegt daran, dass die Frage, welcher Wert aus der Mehrzahl der Werte übergeben wird, vom relativen Laufzeitverhalten der einzelnen Threads abhängt, mithin von der erfindungsgemäß beabsichtigten Race Condition. Insofern wird sich der Wert, der beim Ausführen des Programmcodes auf einem Mehr-Kern-Prozessor übergeben wird, von dem Wert unterscheiden, welcher beim Ausführen des Programmcodes auf einem Ein-Kern-Prozessor übergeben wird.

Weiterhin ist es bevorzugt, dass die Kommunikation zwischen zumindest zwei der Threads eine Übergabe eines Wertes von einem übergebenden Thread an einen empfangenden Thread umfasst, wobei aus dem dem empfangenden Thread zugeordneten Programmcodeabschnitt des Programmcodes oder aus dem dem übergebenden Thread zugeordneten Programmcodeabschnitt des Programmcodes nicht abgeleitet werden kann, welcher Thread aus einer Mehrzahl von Threads der übergebende Thread ist. Mit anderen Worten ist es aus dem Programmcode nicht ohne weiteres ablesbar, zwischen welchen der Threads beim Ausführen des Programmcodes eine Kommunikation stattfindet. Dies kann wiederum, aufgrund der beabsichtigten Race Condition, davon abhängen, ob der Programmcode auf einem Ein-Kern-Prozessor oder einem Mehr-Kern-Prozessor ausgeführt wird.

Es versteht sich, dass die vorstehend beschriebenen Varianten in praktisch beliebiger Weise kombiniert werden können. Mit anderen Worten kann jede Variante für sich oder jede mögliche Kombination einzelner Varianten die erfindungsgemäße Idee umsetzen.

Eine bevorzugte Ausführungsform eines erfindungsgemäßen Computerprogrammprodukts umfasst folglich ein computerlesbares Speichermedium sowie einen darauf gespeicherten Programmcode. Dieser Programmcode ist eingerichtet, auf einem Prozessor ausgeführt zu werden, wobei bei der Ausführung des Programmcodes auf dem Prozessor nebenläufig ausführbare Threads erzeugt werden. Der Programmcode ist dabei derart ausgebildet, dass beim Ausführen des Programmcodes beabsichtigt eine Race Condition zwischen einzelnen Threads derart entsteht, dass abhängig davon, ob der Programmcode auf einem Ein-Kern-Prozessor oder einem Mehr-Kern-Prozessor ausgeführt wird, ein durch den Programmcode berechnetes Ergebnis unterschiedlich ausfällt.

Gemäß einer bevorzugten Ausführungsform umfasst der Programmcode eine so genannte White-Box-Implementierung eines kryptographischen Verfahrens. Dabei wird ein kryptografisches Verfahren derart implementiert, dass ein geheim zu haltender Wert, beispielsweise ein kryptographischer Schlüssel oder ein Schlüsselteil, in dem implementierten Programmcode selbst vorliegt.

Gemäß einer weiteren bevorzugten Ausführungsform ist das Speichermedium, auf dem der Programmcode gespeichert ist, eine Speichereinrichtung eines mobilen Endgeräts, beispielsweise eines Smartphones oder eines Tablet-Computers, und der Programmcode ist eingerichtet, auf einem Mehr-Kern-Prozessor des mobilen Endgeräts nebenläufig ausgeführt zu werden.

Die vorliegende Erfindung wird im Folgenden mit Bezug auf die beiliegenden Zeichnungen exemplarisch beschrieben. Darin zeigen:
- Figur 1: schematisch einzelne Instruktionen eines ersten und eines zweiten Threads, die beim Ausführen eines Programmcodes erzeugt werden;
- Figur 2: schematisch eine Ausführungsreihenfolge der einzelnen Instruktionen der beiden Threads beim Ausführen des Programmcodes auf einem Ein-Kern-Prozessor und
- Figur 3: schematisch eine Ausführungsreihenfolge der einzelnen Instruktionen der beiden Threads beim Ausführen des Programmcodes auf einem Mehr-Kern-Prozessor.

Das folgende Programm-Listing zeigt exemplarisch einen Programmcode, welcher beim Ausführen des Programmcodes auf einem Prozessor zwei Threads erzeugt, die nebenläufig ausgeführt werden können. Dabei sei bemerkt, dass der Programmcode lediglich exemplarisch den Grundgedanken der vorliegenden Erfindung illustriert und einige bevorzugte Maßnahmen zeigt, wie mittels einer beabsichtigt herbeigeführten Race Condition ein seitens des Programmcode berechnetes Ergebnis in dem Fall, dass der Programmcode auf einem Mehr-Kern-Prozessor ausgeführt wird, deterministisch von einem Ergebnis abweicht, welches durch den Programmcode berechnet wird, wenn der Programmcode auf einem Ein-Kern-Prozessor ausgeführt wird.

Die Implementierung im gezeigten Beispiel erfolgt in "Haskell", einer so genannten funktionalen Programmiersprache. Es versteht sich, dass der Grundgedanke der Erfindung praktisch jeder beliebigen Programmiersprache, insbesondere auch mittels einer so genannten imperativen Programmiersprache, in gleicher Weise ausgeführt werden kann.

```
 10 import Control Concurrent.
 20 import System.Environment (getArgs)
 30 import System.IO
 -- some computation to do
 40 primes:: [Integer]
 50 primes = 2:[p | p <- [3, 5.. ], all ((/= 0).(p 'mod')) $
     takeWhile ((<=p). (^2)) primes
 -- thread1 simulating main thread returning two different values
 depending on -- number of cores used
 60 thread1 :: MVar String -> MVar () -> String -> String -> IO ()
 70 thread1 m sync a b = do
 80 putMVar m a -- offer first value
 90 yield -- switch to other threads
 100 putMVar sync () -- start synchronization
 110 yield -- switch to other threads
 120 modifyMVar_m (\_-> return b) -- take first value out
                                        -- and offer second value
  -- thread2 simulating a cryptographic calculation requesting input
 -- from OS
 130 thread2 :: MVar String -> MVar String -> MVar () -> IO ()
 140 thread2 m m' sync = do
 150 takeMVar sync -- wait for synchronization
 160 let q = primes !! 1000 -- execute computation
 170 p <- return $ seq q q -- (compute primes)
 180 x <- takeMVar m -- take current value
 190 putMVar m' x
 -- main
 200 main = do
 210 hSetBuffering stdout NoBuffering
 220 [larg0, largl] <- getArgs
 230 m <- newEmptyMVar
 240 m' <- newEmptyMVar
 250 sync <- newEmptyMVar
 260 forkIO $ Thread2 m m' sync
 270 forkIO $ Thread1 m sync arg0 argl
 280 x <- takeMVar m'
 290 print x
```

Der Grundgedanke der Erfindung wird in dem Beispiel dadurch aufgezeigt, dass abhängig davon, ob der Programmcode auf einem oder mehreren Kernen durchgeführt wird, ein von dem ersten Thread "Thread1" an den zweiten Thread "Thread2" übergebener Wert, welcher dann von dem zweiten Thread an das Hauptprogramm zur Ausgabe übergeben wird, einen unterschiedlichen Wert besitzt.

Der erste Thread (vergleiche Zeilen 60-120) belegt in einem ersten Schritt (Zeile 80) eine synchronisierte Übergabevariable "m" mit dem Wert "a". Dieser Wert könnte nun von dem zweiten Thread aus der Variable "m" entnommen werden.

In einem nächsten Schritt (Zeile 90) gibt der erste Thread die Ausführung an den Scheduler zurück, das heißt es wird ein Kontextwechsel durchgeführt, sofern ein wartender Thread vorliegt.

In der in Zeile 100 gezeigten Instruktion füllt der erste Thread eine Synchronisierungsvariable "sync".

Im nächsten Schritt (Zeile 110) gibt der erste Thread die Ausführung erneut an den Scheduler zurück, das heißt es wird erneut ein Kontextwechsel durchgeführt, sofern ein wartender Thread vorliegt.

In der Instruktion in Zeile 120 ändert der erste Thread den Wert der Variable "m", indem der darin derzeit befindliche Wert "a" herausgenommen und ein neuer Wert "b" in die Variable eingegeben wird.

Der zweite Thread (Zeilen 130-190) ist einfacher aufgebaut.

In Zeile 150 wird eine Synchronisierung angefordert.

In den Zeilen 160 und 170 wird exemplarisch eine Berechnung durchgeführt, beispielsweise das Berechnen einer vorgegebenen Anzahl von Primzahlen (vgl. Zeilen 40,50). Tatsächlich wird die tausendste Primzahl bestimmt. Diese Instruktionen dienen im gezeigten Beispiel lediglich dazu, den zweiten Thread eine gewisse Zeit "zu beschäftigen". Der zweite Thread ist auf diese Weise derart ausgebildet, dass er im Vergleich zum ersten Thread eine längere Laufzeit benötigt, insbesondere aufgrund der Berechnung in den Zeilen 160 und 170.

In Zeile 180 entnimmt der zweite Thread den aktuell in der Variable "m" enthaltenen Wert und speichert diesen Wert als "x".

In Zeile 190 schließlich wird die Variable "m" mit dem in x gespeicherten Wert gefüllt.

Das Hauptprogramm schließlich (vgl. Zeilen 200-290) empfängt zwei Eingabeparameter (Zeile 220), erzeugt zwei synchronisierte Übergabevariablen und die Synchronisierungsvariable, "m"," m'" und "sync" (Zeilen 230-250) und erzeugt die beiden Threads "Thread2" und "Thread1" mit den in den entsprechenden Instruktionen in den Zeilen 260 und 270 angegebenen Parametern.

Schließlich (vgl. Zeile 280, 290) gibt das Hauptprogramm den aktuellen Wert der Variable "m'" aus.

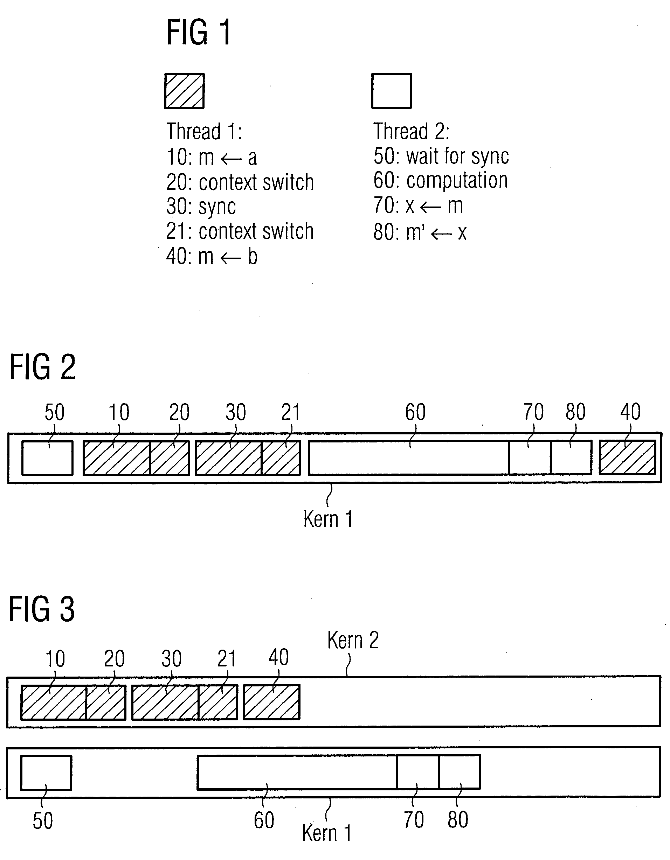

Mit Bezug auf die Figuren 2 und 3 wird nun dargestellt, wie sich dieses Ergebnis, der Wert der Variable "m'", unterscheidet, abhängig davon, ob der Programmcode auf einem Ein-Kern-Prozessor ausgeführt wird (vgl. Figur 2) oder auf einem Mehr-Kern-Prozessor ausgeführt wird (vgl. Figur 3).

Beim Ausführen auf einem Ein-Kern-Prozessor, startend mit dem "Thread2", wird dieser "Thread2" bereits in der ersten Instruktion 50 blockiert, da er auf eine Synchronisierung wartet.

Folglich kommt "Thread1" zur Ausführung. Die Instruktionen 10 und 20 werden durchgeführt. Die Instruktion 20, die Aufforderung zum Kontextwechsel, bleibt wirkungslos, da der zweite Thread weiterhin blockiert ist.

Folglich wird der erste Thread mit der Instruktion 30, welche eine Synchronisierung mit dem zweiten Thread durchführt, fortgesetzt. Der zweite Thread wird dadurch entblockiert, d.h. wird zu einem wartenden Thread, der ausgeführt werden kann, sofern der Scheduler diesen Thread dem Prozessor zuteilt. Mit der Instruktion 21 des ersten Threads wird nun ein Kontextwechsel zum zweiten Thread durchgeführt.

Nun kann der zweite Thread vollständig ausgeführt werden. Dabei wird in der Instruktion 70 der aktuelle Wert der Variable "m" entnommen (vgl. Instruktion 10 des "Thread1", dieser aktuelle Wert ist "a") und in die Variable "m'" gefüllt.

Der nachfolgende Kontextwechsel zum "Thread1" zum Durchführen der Instruktion 40 bleibt für die Ausgabe des Hauptprogramms wirkungslos, da der "Thread2" den Wert aus der Variabel "m" bereits entnommen hat, bevor der erste Thread diesen Wert ändert (vgl. Instruktion 40 des "Thread1").

Gemäß dieser Ausführungsform wird durch das Hauptprogramm folglich in Zeile 290 der Wert "a" ausgeben.

Beim Ausführen auf einem Mehr-Kern-Prozessor (vgl. Fig. 3) wird erneut mit dem "Thread2" im Kern 1 begonnen, mit der Instruktion 50, d.h. der Aufforderung zur Synchronisierung.

Parallel kann dabei der "Thread1" auf dem zweiten Kern durchgeführt werden. Die Aufforderung zum Kontextwechsel in der Instruktion 20 bleibt erneut wirkungslos, jedoch ist nach dem Durchführen der Instruktion 30 durch den ersten Thread die von dem zweiten Thread angeforderte Synchronisierung erfolgt, so dass der zweite Thread dann in dem ersten Kern weiter ausgeführt werden kann.

Parallel dazu kann allerdings auch der erste Thread im zweiten Kern weiter ausgeführt werden. Nun bleibt auch die zweite Anforderung zu einem Kontextwechsel in der Instruktion 21 wirkungslos. Es liegt kein wartender Thread vor, da "Thread2" auf dem Kern 1 bereits ausgeführt wird.

Folglich kann auch "Thread 1" unmittelbar im zweiten Kern weiter ausgeführt werden. Dies hat zur Folge, dass "Thread1" in Instruktion 40 den Wert der Variable "m" von "a" auf "b" ändert, bevor die Instruktion 70 des "Thread2" durchgeführt wird. Dies liegt daran, dass die Berechnung in Instruktion 60 des "Thread2" deutlich länger dauert als die Berechnung der Instruktionen 21 und 40 des "Thread1".

Daher entnimmt der "Thread2" in der Instruktion 70 aus der Variable "m" nun den Wert "b", welcher folglich durch das Hauptprogramm ausgegeben wird.

Der Programmcode zeigt daher exemplarisch verschiedene Möglichkeiten, eine Race Condition zwischen zumindest zwei Threads zu erzeugen. Dazu kann zum einen der Programmcode derart ausgebildet sein, dass beim Ausführen des Programmcodes auf einem Ein-Kern-Prozessor ein oder mehrere Kontextwechsel von einem ersten Thread zu einem zweiten Thread erfolgen. Entsprechende Kontextwechsel müssen beim Ausführen des Programmcodes auf einem Mehr-Kern-Prozessor nicht erfolgen.

Dies zeigt sich am obigen Beispiel daran, dass beim Ausführen des Programmcodes auf einem Ein-Kern-Prozessor der in Instruktion 21 des "Thread1" angeforderte Kontextwechsel tatsächlich stattfindet (vgl. Figur 2), beim Ausführen des Programmcodes auf zwei oder mehr Kernen ein solcher Kontextwechsel aber unterbleibt (vgl. Figur 3).

Ein Kontextwechsel kann dabei auch dadurch hervorgerufen werden, dass ein Thread, auf einer Ein-Kern-Umgebung, blockiert ist, beispielsweise dadurch, dass er auf eine Synchronisierung wartet (vgl. Instruktion 50 in Figur 2).

Eine Codeanalyse kann dabei insbesondere dadurch erschwert werden, dass der Programmcode Instruktionen zum Durchführen eines Kontextwechsels umfasst, welche auf den Programmablauf keine Wirkung haben müssen (vgl. die Instruktionen 20 in den Figuren 2 und 3).

Eine Kommunikation zwischen den einzelnen Threads kann aufgrund der Race Condition dazu führen, dass abhängig davon, ob der Programmcode auf einem Ein-Kern-Prozessor oder einem Mehr-Kern-Prozessor durchgeführt wird, aus dem Programmcode nicht ersichtlich ist, welcher Wert aus einer möglichen Menge von Werten von einem ersten Thread an einen zweiten Thread übergeben wird.

Im gezeigten Beispiel kann die Variable "m" zu dem Zeitpunkt, da sie von dem "Thread2" ausgelesen wird (Instruktion 70) grundsätzlich den Wert "a" (vgl. Instruktion 10) oder den Wert "b" (vgl. Instruktion 40) haben. Aus dem Programmcode selbst ist nicht ersichtlich, welchen dieser beiden Werte der "Thread2" der Variable "m" entnehmen wird.

Es versteht sich, dass in Ergänzung zum obigen Beispiel weitere Threads vorgesehen sein können. Dabei könnte ein dritter Thread ebenfalls auf die Variable "m" zugreifen, d.h. einen Wert einfüllen oder einen darin befindlichen Wert ändern. Insofern könnte aus dem Programmcode nicht mehr unmittelbar abgelesen werden, mit welchem Thread der "Thread2" tatsächlich kommuniziert, da - aufgrund der Race Condition - der Fall eintreten könnte, dass der dritte Thread zuletzt die Variable "m" manipuliert hat, bevor "Thread2" in Instruktion 70 den darin enthaltenen Wert ausliest.

## Patentansprüche

1. Verfahren zum Verschleiern von Programmcode, wobei bei der Ausführung des Programmcodes auf einem Prozessor nebenläufig ausführbare Threads erzeugt werden, **dadurch gekennzeichnet, dass** der Programmcode derart ausgebildet wird,
dass beim Ausführen des Programmcodes eine Race Condition zwischen einzelnen Threads derart entsteht, dass abhängig davon, ob der Programmcode
- auf einem Ein-Kern-Prozessor oder
- auf einem Mehr-Kern-Prozessor
ausgeführt wird, ein durch den Prögrammcode berechnetes Ergebnis (a, b) unterschiedlich ausfällt.

2. Verfahren nach Anspruch 1, **dadurch gekennzeichnet, dass** der Programmcode derart ausgebildet wird, dass beim Ausführen des Programmcodes auf einem Ein-Kern-Prozessor zumindest ein Kontextwechsel (20; 21; 50) von einem ersten Thread zu einem zweiten Thread erfolgt, bevor der erste Thread vollständig abgearbeitet ist.

3. Verfahren nach Anspruch 2, **dadurch gekennzeichnet, dass** der Kontextwechsel erfolgt, weil der erste Thread blockiert wird (50).

4. Verfahren nach Anspruch 2 oder 3, **dadurch gekennzeichnet, dass** der Kontextwechsel von dem ersten Thread aktiv hervorgerufen wird (20; 21).

5. Verfahren nach einem der Ansprüche 2 bis 4, **dadurch gekennzeichnet, dass** der Programmcode derart ausgebildet wird, dass beim Ausführen des Programmcodes auf einem Ein-Kern-Prozessor mehrfach ein Kontextwechsel (20; 21; 50) zwischen einem ersten Thread und einem zweiten Thread erfolgt.

6. Verfahren nach einem der Ansprüche 1 bis 5, **dadurch gekennzeichnet, dass** der Programmcode derart ausgebildet wird, dass beim Ausführen des Programmcodes zumindest zwei der Threads zumindest einmal synchronisiert werden (50, 30).

7. Verfahren nach Anspruch 6, **dadurch gekennzeichnet, dass** der Programmcode derart ausgebildet wird, dass aus einem einem ersten Thread zugeordneten Programmcodeabschnitt des Programmcodes nicht eindeutig ersichtlich ist, mit welchem anderen Thread der erste Thread beim Ausführen des Programmcodes synchronisiert wird.

8. Verfahren nach einem der Ansprüche 1 bis 7, **dadurch gekennzeichnet, dass** der Programmcode derart ausgebildet wird, dass beim Ausführen des Programmcodes eine Kommunikation (10, 40; 70) zwischen zumindest zwei der Threads stattfindet.

9. Verfahren nach Anspruch 8, **dadurch gekennzeichnet, dass** die Kommunikation zwischen zumindest zwei der Threads eine Übergabe eines Wertes aus einer Mehrzahl vom Werten (a, b) von einem ersten Thread an einen zweiten Thread umfasst, wobei aus dem dem ersten Thread zugeordneten Programmcodeabschnitt des Programmcodes oder aus dem dem zweiten Thread zugeordneten Programmcodeabschnitt des Programmcodes nicht abgeleitet werden kann, welcher Wert aus der Mehrzahl der Werte (a, b) beim Ausführen des Programmcodes von dem ersten Thread an den zweiten Thread übergeben wird.

10. Verfahren nach Anspruch 8 oder 9, **dadurch gekennzeichnet, dass** die Kommunikation zwischen zumindest zwei der Threads eine Übergabe eines Wertes von einem übergebenden Thread an einen empfangenden Thread umfasst, wobei aus dem dem empfangenden Thread zugeordneten Programmcodeabschnitt des Programmcodes oder dem dem übergebenden Thread zugeordneten Programmcodeabschnitt des Programmcodes nicht abgeleitet werden kann, welcher Thread aus einer Mehrzahl von Threads der übergebende Thread ist.

11. Computerprogrammprodukt, umfassend ein computerlesbares Speichermedium sowie einen darauf gespeicherten Programmcode, welcher auf einem Prozessor ausführbar ist, wobei bei der Ausführung des Programmcodes auf dem Prozessor nebenläufig ausführbare Threads erzeugt werden, **dadurch gekennzeichnet, dass** der Programmcode derart ausgebildet ist,
dass beim Ausführen des Programmcodes eine Race Condition zwischen einzelnen Threads derart entsteht, dass abhängig davon, ob der Programmcode
- auf einem Ein-Kern-Prozessor oder
- auf einem Mehr-Kern-Prozessor
ausgeführt wird, ein durch den Programmcode berechnetes Ergebnis unterschiedlich ausfällt.

12. Computerprogrammprodukt nach Anspruch 11, **dadurch gekennzeichnet, dass** der Programmcode eine White-Box-Implementierung eines kryptographischen Verfahrens umfasst.

13. Computerprogrammprodukt nach Anspruch 11 oder 12, **dadurch gekennzeichnet, dass** das Speichermedium eine Speichereinrichtung eines mobilen Endgeräts ist und dass der Programmcode eingerichtet ist, auf einem Mehr-Kern-Prozessor des mobilen Endgeräts ausgeführt zu werden.

14. Computerprogrammprodukt nach einem der Ansprüche 11 bis 13, **dadurch gekennzeichnet, dass** der Programmcode eingerichtet ist ein Verfahren nach einem der Ansprüche 2 bis 10 auszuführen, um die deterministische Race Condition entstehen zu lassen.

15. Computerprogrammprodukt nach einem der Ansprüche 11 bis 14, **dadurch gekennzeichnet, dass** die Race Condition auf einem Ein-Kern-Prozessor deterministisch entsteht und auf einem Mehr-Kern-Prozessor nicht entsteht.
